# EUROPEAN PATENT APPLICATION

(11) **EP 2 100 646 A2**
(43) Date of publication of application: **16.09.2009**
(21) Application number: 08012766.5
(22) Date of filing: 16.07.2008

(54) **Three dimensional infrared movement sensing matrix**

(30) Priority: 14.03.2008 US 36909 P; 29.03.2008 US 40655 P; 10.06.2008 US 136726
(71) Applicant: Boink Incorporated, National City CA (US)
(72) Inventor: Toro, William, National City, California (US)
(74) Representative: Fry, David John

(57) **Abstract**

A method and apparatus for detecting position and movement of a subject within a volume of space is described. The apparatus may comprise an upper frame having a first plurality of infrared transmitters configured to emit infrared light through the volume; and a lower frame positioned below the upper frame, having a plurality of receivers configured to detect the infrared light emitted through the volume. The apparatus is configured to fire the transmitters and activate the receivers and the apparatus is configured to report a status of successful infrared light transmission or a status of unsuccessful infrared light transmission for a particular transmitter-receiver pair after one of the first plurality of transmitters is fired.

## Description

### Cross-References to Related Applications

This application claims priority from U.S. Application Serial Number 12/136,726 filed June 10, 2008, U.S. Provisional Application Serial Number 61/036,909 filed March 14,2008 and U.S. Provisional Application Serial Number 61/040,655 filed on March 29, 2008 which are hereby incorporated herein by reference in the respective entirety of each.

### Technical Field

The present invention relates to three dimensional motion tracking, and more particularly, some embodiments relate to an infrared motion and position tracking apparatus.

### Background of the Invention

The subject invention generally relates to an apparatus for detecting three dimensional movements of a subject within a volume of space using a set of successful and unsuccessful beam transmissions within a matrix. The apparatus may be configured as an interactive exercise platform where a subject enters the matrix that measures their movements without the need of any external device being attached to the subject. The movement of the subject is then translated by the apparatus to respond and interact with a game, workout or aerobic routine being operated on the device. Devices presently known for interacting with game or exercise devices generally require some form of mechanical connection to the body of the subject, such as, for example, a hand held controller with buttons or buttons below the subject's feet. The apparatus described herein obviates the need for a mechanical connection to the subject.

### Brief Summary of Embodiments of the Invention

According to one embodiment of the invention, an apparatus for detecting position and movement of a subject within a volume of space comprises an upper frame and a lower frame. The upper frame has a first plurality of infrared transmitters configured to emit infrared light through the volume. The lower frame is positioned below the upper frame and has a plurality of receivers configured to detect the infrared light emitted through the volume. The apparatus is configured to fire the transmitters and activate the receivers and report a status of successful infrared light transmission or a status of unsuccessful infrared light transmission for a particular transmitter-receiver pair after one of the first plurality of transmitters is fired.

In another embodiment, the apparatus may comprise an area disposed within the lower frame and a second plurality of transmitters configured to emit infrared light across the area to the receivers. The receivers are configured to report a status of successful infrared light transmission or a status of unsuccessful infrared light transmission for a particular transmitter-receiver pair after one of the second plurality of transmitters is fired.

In a further embodiment, the apparatus is configured to have a virtual two-dimensional set of individually identifiable sub-areas defined over the area.

In still another embodiment, each transmitter-receiver pair has a unique designation and the sub-areas each have assigned one or more transmitter-receiver pairs, wherein the line of sight for light emitted from the receiver to the transmitter in each transmitter-receiver pair assigned to a particular sub-area passes through the sub-area.

In yet a further embodiment, the apparatus is configured to have a virtual three-dimensional set of individually identifiable sub-volumes defined over the volume.

In another embodiment, each transmitter-receiver pair has a unique designation and the sub-volumes each have assigned one or more transmitter-receiver pairs, wherein the line of sight for light emitted from the receiver to the transmitter in each transmitter-receiver pair assigned to a particular sub-volume, passes through the sub-volume.

In a further embodiment, the apparatus is configured to associate the status of successful infrared light transmission or a status of unsuccessful infrared light transmission for the particular transmitter-receiver pair after the status is reported.

In yet another embodiment, the apparatus is configured to poll the transmitter-receiver pairs in a predefined pattern.

In still a further embodiment, the apparatus is configured to tally the total number of transmitter-receiver pairs having a successful infrared light transmission through a sub-volume and compare it to the total number of assigned transmitter-receiver pairs.

In another embodiment, comparing the total number of transmitter-receiver pairs having a successful infrared light transmission through a sub-volume to the total number of assigned transmitter-receiver pairs comprises computing a ratio of the successful transmissions to the total number of assigned pairs to the sub-volume; wherein the ratio is used to compute an occupancy percentile.

In a further embodiment, the apparatus is configured to have a virtual three-dimensional matrix defined in the volume, the three-dimensional matrix having a plurality of individually identifiable sub-volumes.

In still another embodiment, the apparatus may comprise a case for supporting the upper frame; a first processor configured to interpret the data reported by the receivers; and a display connected to the case, for displaying visual information based on the data interpreted by the first processor.

In yet a further embodiment, the apparatus may comprise a graphical user interface; and a second processor for controlling the graphical user interface. The first processor is configured to convert the data into a format readable by the second processor.

In a variant, the apparatus is configured to display one or more modules for displaying instructions to the subject, to move in a predetermined manner.

In another variant, the apparatus is configured to measure the movements of the subject and compare them to the instructions and display a measurement of the accuracy of the subject's movements based on the measured movements.

In still a further variant, an apparatus for detecting position and movement of an object or person within an area comprises a lower frame encompassing an area. The lower frame comprises a plurality of transmitters configured to emit infrared light across the area and a plurality of receivers configured to detect the infrared light emitted across the area. The apparatus is configured to fire the transmitters and activate the receivers. The apparatus is configured to associate a status of successful infrared light transmission or a status of unsuccessful infrared light transmission for a particular transmitter-receiver pair after the transmitter is fired.

In yet another variant, an electronic game apparatus comprising a game module and an electronic controller configured to interpret the movements of a player of the electronic game to control the game module, without the player touching any mechanical objects.

In a further variant, the electronic controller comprises a set of beams of electromagnetic radiation having a predetermined spatial orientation in relation to the apparatus. The apparatus is configured to interpret the movements of a player by where the player's body intercepts the beams.

In another variant, a method of controlling an electronic apparatus comprises detecting the position and movements of a subject without the subject touching any mechanical objects.

In still a further variant, the method further comprises: positioning a subject within a volume; emitting a series of infrared beams through the volume;

detecting a plurality of the emitted beams across the volume; determining which beams successfully traversed the volume and which beams were blocked by the subject; tallying the total number of beams successfully transmitted through a particular sub-volume of the volume; and comparing the total number of beams successfully transmitted through the sub-volume to the total number of beams that would pass through the sub-volume if the sub-volume were unoccupied.

Other features and aspects of the invention will become apparent from the following detailed description, taken in conjunction with the accompanying drawings, which illustrate, by way of example, the features in accordance with embodiments of the invention. The summary is not intended to limit the scope of the invention, which is defined solely by the claims attached hereto.

### Brief Description of the Drawings

The present invention, in accordance with one or more various embodiments, is described in detail with reference to the following figures. The drawings are provided for purposes of illustration only and merely depict typical or example embodiments of the invention. These drawings are provided to facilitate the reader's understanding of the invention and shall not be considered limiting of the breadth, scope, or applicability of the invention. It should be noted that for clarity and ease of illustration these drawings are not necessarily made to scale.

Some of the figures included herein illustrate various embodiments of the invention from different viewing angles. Although the accompanying descriptive text may refer to such views as "top," "bottom" or "side" views, such references are merely descriptive and do not imply or require that the invention be implemented or used in a particular spatial orientation unless explicitly stated otherwise.

Fig. 1 is a perspective view of a preferred apparatus in accordance with the principles of the invention;

Fig. 2 is a perspective view of the lower frame and floor pad of the apparatus;

Fig. 3 is a perspective view of a virtual three-dimensional set of individually identifiable sub-volumes defined over the volume;

Fig. 4 is a diagram of a sequential firing pattern of the transmitter-receiver pairs in the lower frame;

Fig. 5 is a diagram of a sequential firing pattern of the transmitter-receiver pairs firing from the upper frame to the receivers in the lower frame;

Fig. 6 is a top view of the transmitters in the upper frame projected on to the area inside the lower frame;

Fig. 7 is a diagram of a firing pattern of the transmitter-receiver pairs in the lower frame;

Fig. 8 is a side view of a diagram of a volume matrix illustrating the floors or levels;

Fig. 9 is a top view of a diagram of a volume matrix illustrating the columns;

Fig. 10 is a perspective view of the upper frame;

Fig. 11 is an illustration of a circuit board comprising a primary matrix analysis circuit board;

Fig. 12 is a diagram of an area matrix for a joystick mode of operation;

Fig. 13 is a diagram of an area matrix for a puzzle mode of operation;

Fig. 14 is a diagram of an area matrix for a zone mode of operation;

Fig. 15 is an illustration of an infrared transmitter and receiver;

Fig. 16 is a flow chart of a method detecting position and movement of a subject within a volume; and

Fig. 17 is a block diagram of a system for detecting position and movement of a subject within a volume.

The figures are not intended to be exhaustive or to limit the invention to the precise form disclosed. It should be understood that the invention can be practiced with modification and alteration, and that the invention be limited only by the claims and the equivalents thereof.

### Detailed Description of the Embodiments of the Invention

From time-to-time, the present invention is described herein in terms of example environments. Description in terms of these environments is provided to allow the various features and embodiments of the invention to be portrayed in the context of an exemplary application. After reading this description, it will become apparent to one of ordinary skill in the art how the invention can be implemented in different and alternative environments.

Unless defined otherwise, all technical and scientific terms used herein have the same meaning as is commonly understood by one of ordinary skill in the art to which this invention belongs. All patents, applications, published applications and other publications referred to herein are incorporated by reference in their entirety. If a definition set forth in this section is contrary to or otherwise inconsistent with a definition set forth in applications, published applications and other publications that are herein incorporated by reference, the definition set forth in this document prevails over the definition that is incorporated herein by reference.

### Overview

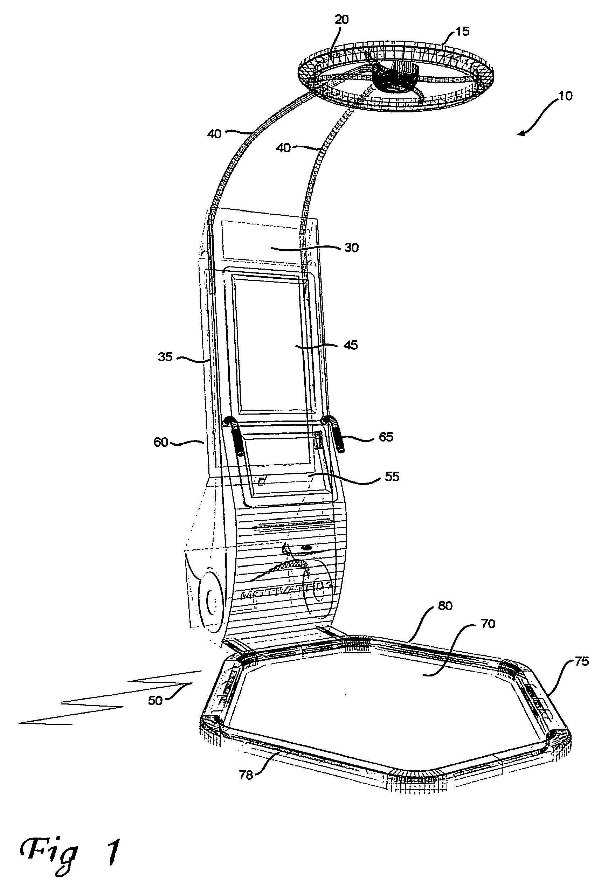

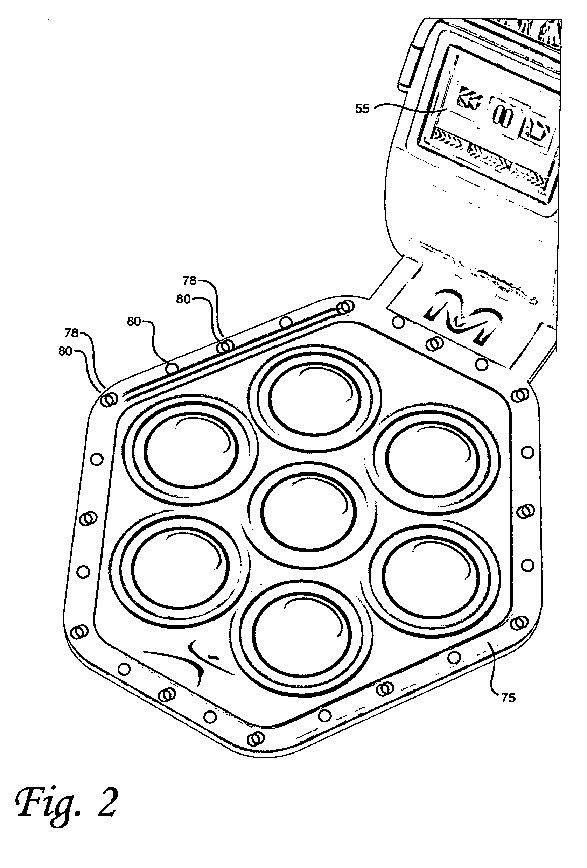

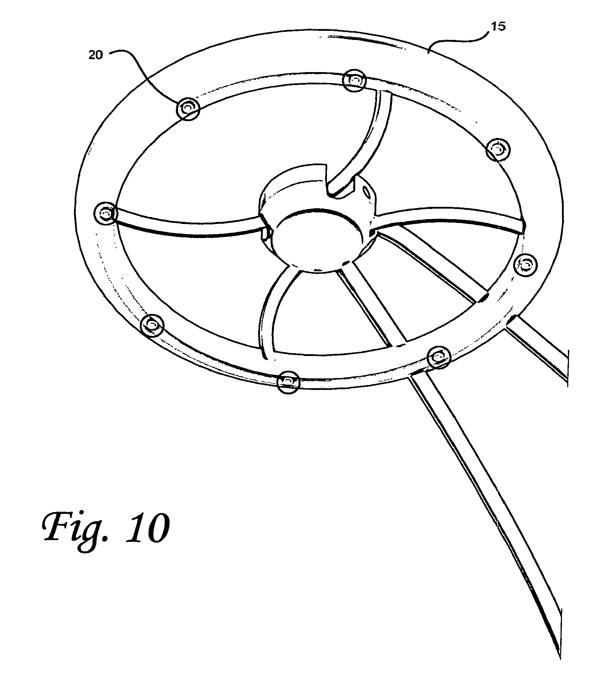

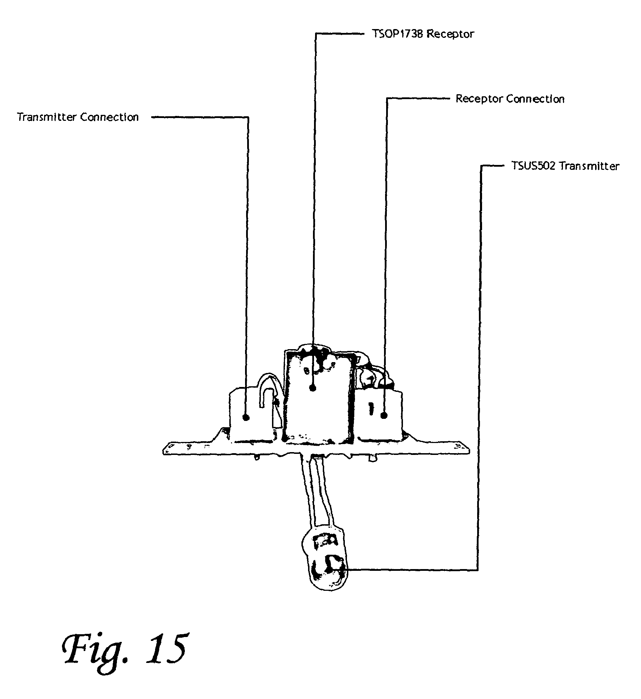

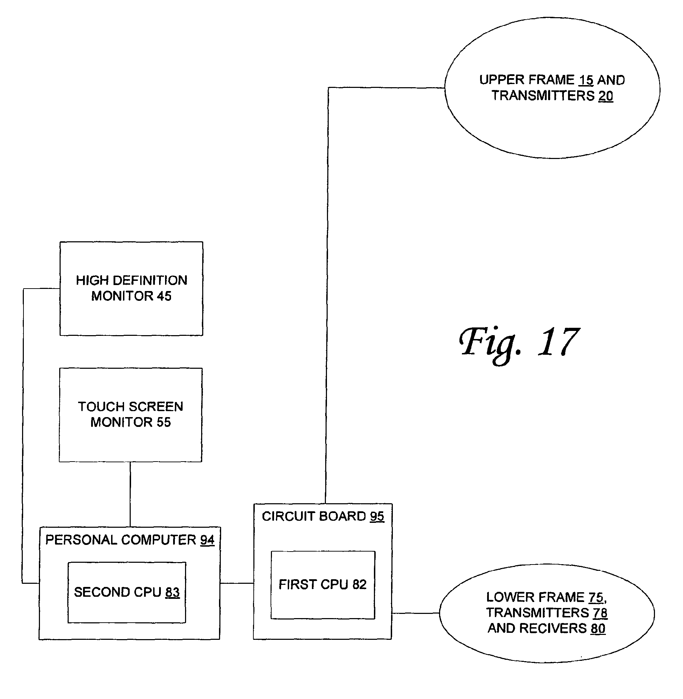

The present invention is directed toward to a system and apparatus 10 for detecting three dimensional movements of a subject within a volume of space using a set of successful and unsuccessful beam transmissions within a matrix. Referring to Figs. 1 and 17, the main components of a preferred embodiment of the apparatus 10 may include an upper frame 15 or dome which may comprise a circular enclosure to house electronics located atop the apparatus 10. Referring to Figs. 1 and 10, eight infrared transmitters 20 may be positioned around the circumference of the circular enclosure 15. The upper frame 15 may be connected to a central frame 35 of the apparatus 10 via support arms 40. The central frame 35 may comprise a steel cage or a strong metal enclosure, to serve as the main body of the apparatus 10. Referring to Fig. 2, a lower frame 75 may be connected to the central frame 35, and is positionable on the floor 50, and may comprise a floor sensor ring that houses, in one embodiment, twenty-four receivers 80 and twelve transmitters 78. One example transmitter-receiver pair located in the lower frame 15 is depicted in Fig. 15. The transmitter-receiver may comprise a receptor (TSOP1738) and a transmitter (TSUS502) and may be connected by a transmitter connection and a receptor connection. The strength of the transmitters 20, 78 should be selected so that infrared beam is blocked by a subject's body segments, but sufficiently powered to remain consistent. In one embodiment, every other receiver 80 in the lower frame 75 is positioned adjacent a lower frame transmitter 78.

Referring to Fig. 17, the apparatus may include a first CPU 82 comprising a matrix delineation and secondary analysis processing unit and part of a personal computer 94, a second CPU 83 comprising a graphical user interface processing unit and a circuit board 95 comprising a primary matrix analysis circuit board. A set of infrared transmitters 78 and infrared light detectors 80 are placed along the perimeter of the lower frame 75.

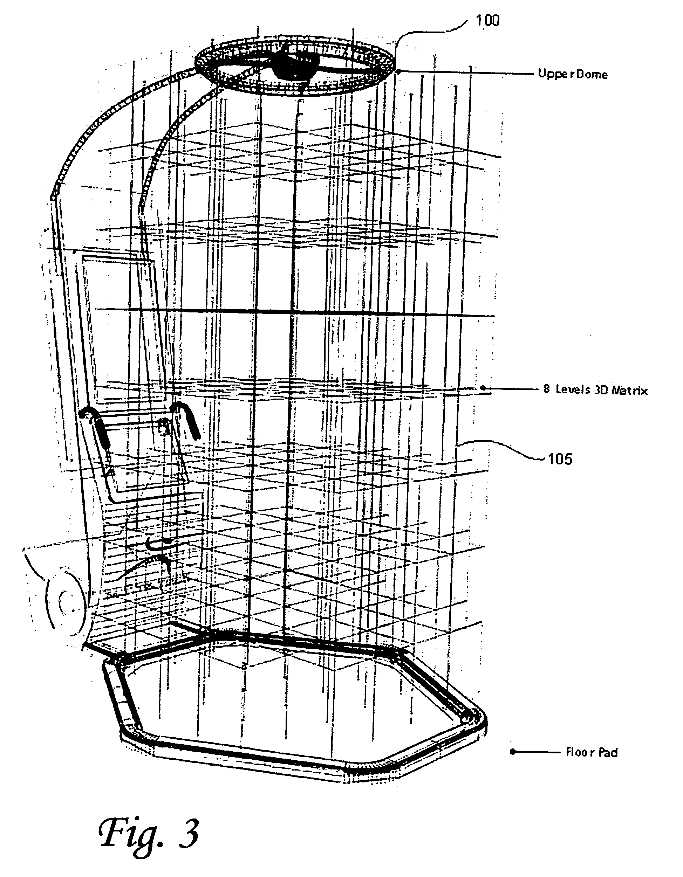

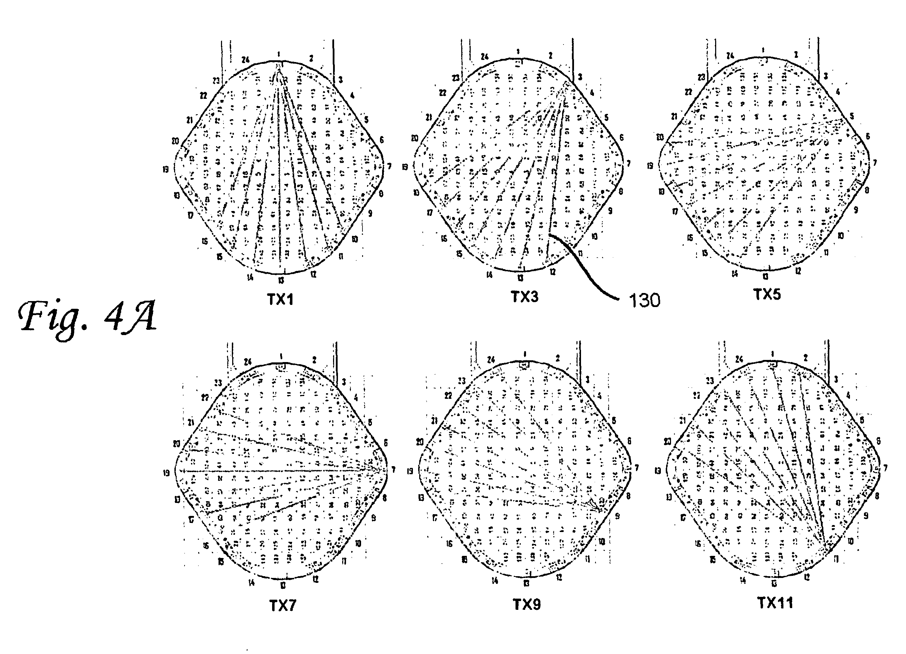

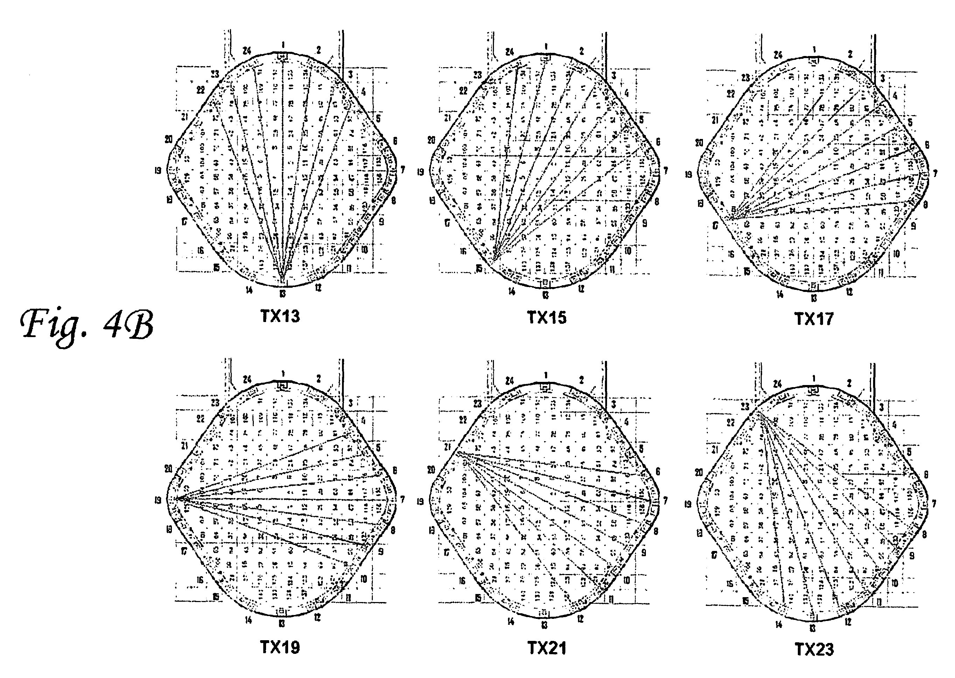

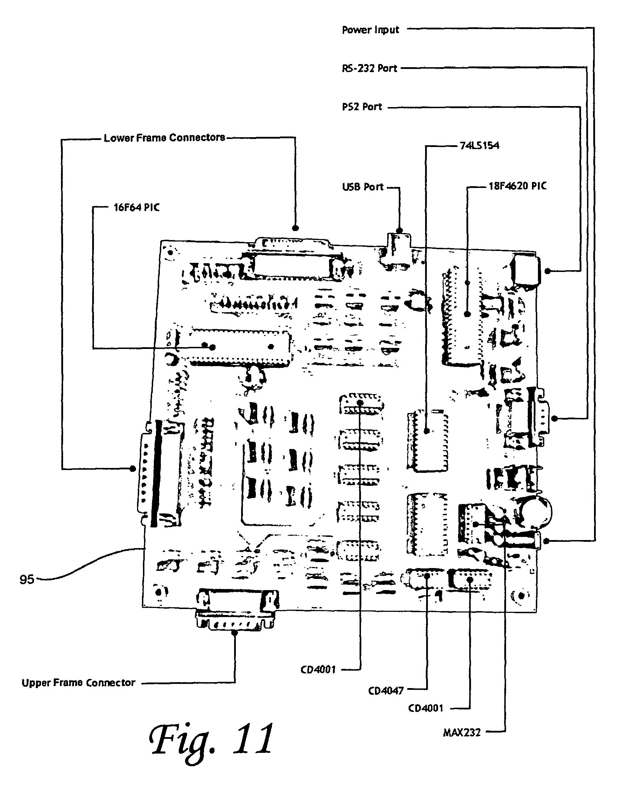

In one embodiment depicted in Fig. 11, the circuit board 95 controls the transmitters 20, 78 and receivers 80 and is configured to complete a sensing loop by individually firing each transmitter 20, 78 (lower and upper frame) and collecting the data received from all the receiving sensors 80. The board 95 may comprise a power input, communication ports such as a LAN connector (RS_232 Port), a PS2 Port, a USB Port and communication ports for the upper and lower frames. The board 95 also has a plurality of PICs (16F64, 74LS154, 18F4620, CD4001, CD4047, MAX232) for carrying out the operations of the board 95. The space that the infrared beams emitted from the upper frame 15 travel through is designated by a first volume matrix 100 of sub-volumes 105, for example, as shown in Figs. 3, 5, and 8. The area that the infrared beams emitted from a transmitter 78 in the lower frame 75 is designated by an area matrix 110 of sub-areas 115, as shown in Figs. 4, 7, and 12-14.

The data regarding the beam interruptions may be captured at very fast intervals in comparison to the time scale that a typical subject moves. After the data is acquired, it is then evaluated. The locations where the infrared signal traveled successfully between transmitter 20, 78 and receiver 80 are mathematically evaluated against the data of the locations where the infrared signal during a particular sensing loop had not been received successfully. A constantly evolving pattern of information is produced as the subject moves within the sensing matrix 100, 110.

The differential information between the assessment of all the transmitter-receiver pairs may give the circuit board 95 the capability of mapping in a three dimensional grid the position of all the subject's body parts. This information is then scaled and filtered to transmit to the computer a much narrower segment of information which then gives the first CPU 82 the ability to graphically respond to the human movement, for example, the movement of an character on the display 45. Certain bodily movements may be used as activators for a program being operated on the apparatus 10, which once positively identified by the apparatus, can be used as indicators of a successful movement or combination of movements, for example, the completion of an exercise.

In another embodiment, the apparatus may also include cardio sensors 65 comprising heart rate monitoring electrodes, a sound system having a speaker and subwoofer, and a floor pad 70 comprising a low impact, cushioned stress reduction workout floor platform disposed within the lower frame. The apparatus may include a back lit sign 30 as decorative element or for advertising. A high definition monitor 45 may be disposed in the frame 35 and oriented vertically, so that the long axis of the screen is perpendicular to the floor 50. A high definition touch screen monitor 55 may be positioned below the monitor for serving as a first user interface with the device. An FM Frequency Transmitter 25 may be connected to the upper frame 15 for silent mode operation in which the apparatus 10 deactivates its external speakers to send a private FM signal to be tuned in by a wireless radio headset receiver used by a subject. The apparatus 10 a may include a magnetic card reader 60 for regulating usage of the apparatus 10 or, alternatively, a token validating mechanism with a token receptacle leading to a storage vault.

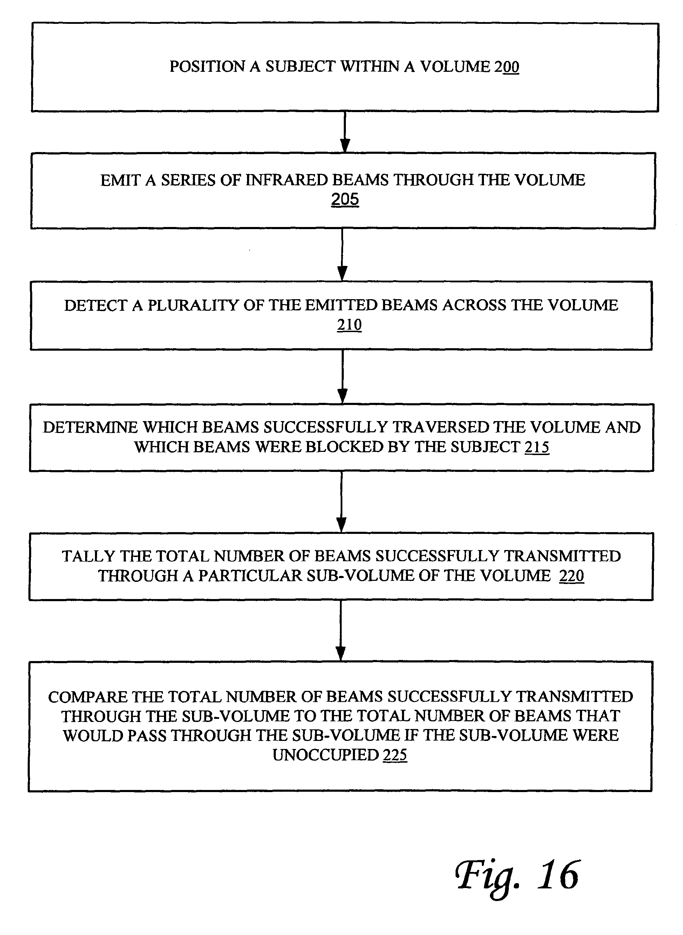

Referring to Fig. 16, in a further embodiment, a method of controlling an electronic apparatus comprises detecting the position and movements of a subject without the subject touching any mechanical objects. In a step 200 a subject is positioned within a volume. In a step 205, a series of infrared beams is emitted through the volume. In a step 210 a plurality of the emitted beams across the volume is detected. In a step 215, the beams that successfully traversed the volume and the beams that were blocked by the subject are determined. In a step 220, the total number of beams successfully transmitted through a particular sub-volume of the volume is tallied. In a step 225, the total number of beams successfully transmitted through the sub-volume is compared to the total number of beams that would pass through the sub-volume if the sub-volume were unoccupied.

### Floor Pad Area Sensing Matrix

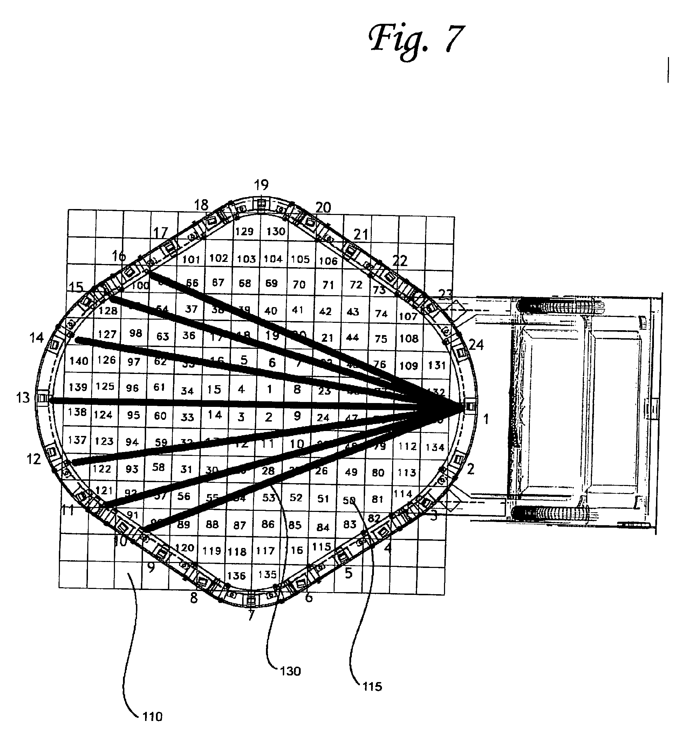

Referring to Fig. 7, in one embodiment, a floor surface area disposed within the lower frame 75 is divided into a matrix 110 of 140 sub-areas 115 comprising squares whose dimensions are 10 centimeters by 10 centimeters. Once the apparatus 10 completes a full cycle of firing the lower frame transmitters 20 and receivers it proceeds to identify the status of each square 115 through a process described below. If one of the floor squares 115 is found to be occupied, then the matrix identifies it as 1 BIT, if a square is empty it is then identified as a 0 BIT. The information is then transmitted in the order of the numerical value of each square as represented.

In one embodiment, the information may be transmitted via serial Rs-232, at a rate of 115.200, 8 bits with no parity BIT. The information is sent only at times that the apparatus detects a change in status. For the informational interchange it sends 18 bytes of information.

### Three Dimensional Area Sensing Matrix

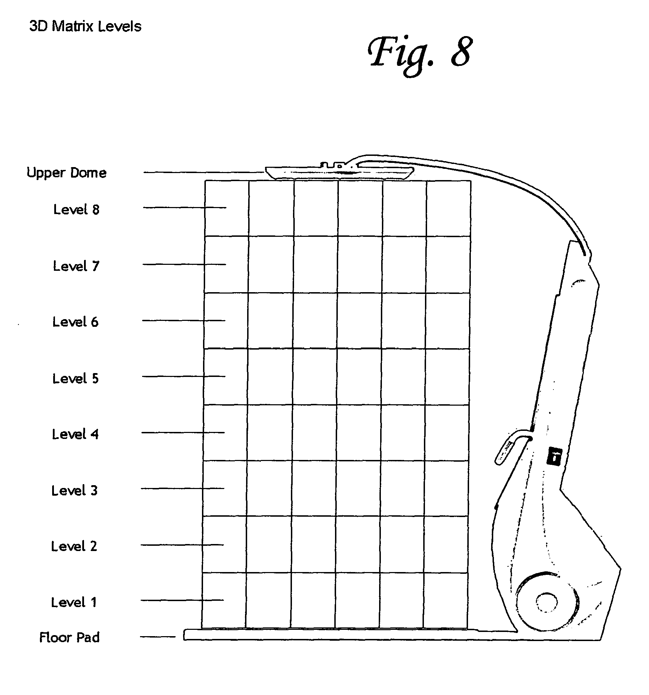

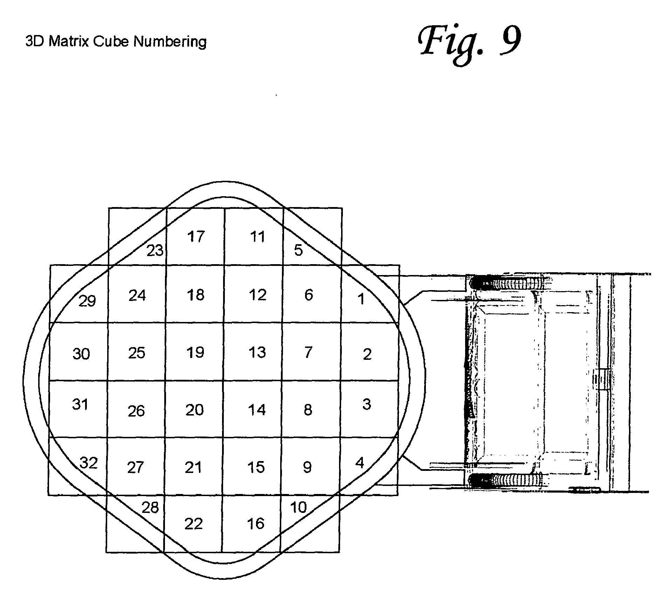

In one embodiment, the three dimensional volume matrix 100 directly above the lower frame 15 is also defined by segmenting the volume into voxels that are 20 centimeters long - 20 centimeters deep - 24 centimeters high. Figs. 8 and 9 indicate the layout of the volume matrix 100. The volume matrix 100 is comprised of eight levels or floors that have a total of 32 cubes per level. Fig. 9 illustrates one example numbering of the columns in the volume matrix 100. This yields a total of 256 cubes which are represented individually by one BIT of information. A "1" indicates that the cube is occupied and a "0" indicates that the cube is currently empty.

The information is thus divided into 32 bytes starting with the first level and terminating on the eighth. Each level will be represented by 4 bytes which will represent the current state of all cubes on that level. The string is therefore broken into eight sections of 4 bytes in length.

This information is transmitted in addition to the 18 bytes that represent the floor grid. Thus, when a complete sensor loop is conducted the apparatus 10 transmits a total of 50 bytes, 18 corresponding to the floor grid and 32 to the upper or three dimensional grid. By mapping the location of the 50 bytes onto the matrix 100 the apparatus 10 is able to create a silhouetted profile of the individual within the perimeter both at floor level and throughout the upper area.

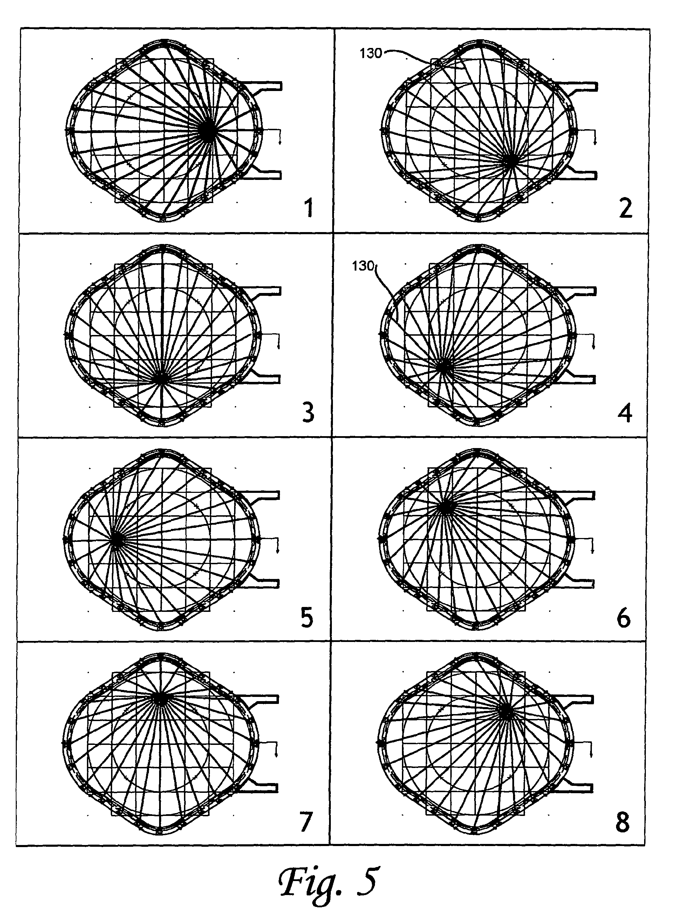

In Figs. 4 and 5, one can observe a cycle which represents a sequence of ordered transmission which is completed by the infrared transmitters 20, 78. A complete sensor loop comprises the firing of all the lower and upper frame transmitters 20, 78 and the reception or lack of reception by the appropriate receiver 80. The analysis of the complete sensor loop of information represents one poll of the matrix 100, 110, which includes information regarding the status of each beam after being emitted from a transmitter 20, 78 as having been successfully transmitted or unsuccessfully transmitted.

### Communication between the circuit board and the second CPU

Once the data is obtained and analyzed it is converted into PS/2 format so that it can be readily understood and processed by the second CPU. This format comprises a series of keyboard signals which are easily and quickly processed by almost any computer. The data can be shared with the computer through either RS-232 or PS/2 format.

This data conversion of the movement within the matrix 100, 110 generates multiple methodologies of data transmission, for example Joystick, Puzzle, Circular and Zone (described below) for the area matrix 110 and one methodology of data transmission, Holistic, for the volume matrix 100. In addition to these formats of operation, there are several diagnostic, calibration, tolerance and debugging modes of data transmission.

### Analysis of Data & Movement Recognition

The motion detection completed by the apparatus 10 may occur at by completing 30 full sensor loops per second. These complete cycles may include: firing sequentially all transmitters 20, 78; registering the results of each individual transmission; tabulating all the results of both the area 110 and volume matrixes 100; and analyzing the findings, interpolating the data and assigning specific positioning and/or movement placement.

There are many different sets of criteria that the circuit board 95 may use to determine movement and positioning of the subject. In all cases the basic raw data which includes the analysis of the successful transmission of infrared signals is used as the most basic source of data. This data then can be interpreted through different methods to obtain the final results. Some examples of methods are described below.

In one embodiment, each beam in the matrix is uniquely identified by the transmitter that sent the beam and the intended receiver of that beam. For example, Fig. 7 illustrates seven beams in the floor pad portion of the matrix transmitted from receiver 1 and intended to be received by receivers 10, 11, 12, 13, 14, 15 and 16. The beam on the far left, for example, can be uniquely identified as 1-16, transmitter 1, receiver 16. In the example shown in Fig. 7, the lower frame 15 contains 12 transmitters transmitting beams detected by seven receivers for each transmitter, thus producing 84 beams on which to collect data (transmitted or blocked). The volume matrix 100, which is also divided up into uniquely identified areas (as illustrated in Figs. 8 and 9) includes, in this example, eight transmitters transmitting beams detected by twenty-four receivers for each transmitter, thus producing 192 beams on which to collect data.

Once the beams 130 are defined, each block (sub-area 115 or sub-volume 105) is assigned all the individual beams that would travel through the block if it were unoccupied. The data gathered regarding each beam 130 is whether a transmission was successful or not. If a beam is not transmitted successfully, then this information is connected to all the blocks that include that blocked beam in their assigned list of beams. Each block is also assigned a total number of beams based on the count of the number beams that would travel through the block if it were unoccupied. A calculation for each block is determined by subtracting from 1 the quotient of the number of beams that are assigned to a particular block and are blocked and the total number of assigned beams to the block (i.e. # blocked beams/# total beams). This calculation is done for all blocks and compared to determine the most likely occupied blocks. The higher the calculation, the more likely the block is occupied.

### Lower Frame Data Analysis

In a further embodiment, the following steps are taken by the first CPU in order to establish the current placement of the subject and their movement pattern on the floor pad surface 70.

Each time the apparatus completes sensor loop of the lower frame transmitter-receiver pairs 78, 80, the data is stored and analyzed in the following manner.

Upon an initial data polling cycle, in one embodiment, the following method may be used. The area matrix 110 may be organized into a grid as shown in Fig. 7.

1) All of the possible sub-areas 115 on the floor (140 shown in Fig. 7, for example) are individually identified by a unique number and assigned each line of sight, direct infrared transmissions that would successfully be transmitted if the sub-area 115 was empty.

2) Each of the 12 lower frame transmitters 78 is fired individually and sequentially in a pattern show in Figs. 4A and 4B. The corresponding seven receivers report the status of the transmission. (Successfully completed = 1, Incomplete = 0).

3) After the receivers 80 report their findings based on the complete cycle of 12 transmission and 7 receptions per (84 total), the first CPU proceeds to identify and correlate the number of successfully transmitted beams 130 with the sub-areas 115 having those beams 130 assigned to them. The first CPU then computes a occupancy probability based on a ratio of the number of beams 130 detected and assigned to the sub-area 115 versus the total possible number of transmissions that could have been completed if the area matrix 110 is completely unoccupied. The following formula may be used:

Probability of occupancy of a sub-area = 1 - (# of beams assigned to the sub-area successfully transmitted/total # beams that travel through the sub-area when the area matrix is empty))/100)

For example if a beam 130 was successfully received and was assigned to a sub-area 115 where four line of sight transmissions would be completed in an unobstructed scenario, the percentile of occupied probability (or occupancy probability) would be calculated as: (1 - (1/4))/100) = 75%

4) The first CPU then in each given analysis cycle, will proceed to discard all but the ten highest probably occupied sub-areas 115.

5) For each one of the ten sub-areas 115 the adjacent sub-areas which are directly surrounding the sub-area are used to generate a weighted average for the given occupancy probability of the assigned sub-area. This new value is established for all 10 of the selected sub-areas mentioned in the previous step.

For example, if sub-area number 14, which is located near the center of the area matrix 110, is one of the 10 highest average grids in the first round of analysis, then the surrounding eight sub-areas (3, 4, 15, 34, 33, 32, 13, 12) would have their occupancy percentiles averaged along with that of sub-area 14 and the new value would be established as the weighted probability value of sub-area 14.

In another example, if the sub-area is located near the perimeter, it would not have eight neighboring grids. If sub-area number 120 was one of the ten highest average grids in the first round of analysis, the surrounding 3 grids (88,89, 119) would have their occupancy percentiles averaged along with that of grid 120 and the new value would be established as the weighted probability value of grid 120.

6) At this point the first CPU selects the top four values in the new average weighted scale of the top ten sub-areas and officially stamps those four sub-areas as occupied. This will give the external software the values of the placement of the feet on the floor pad.

### Floor Transmitters Firing Sequence

Upon subsequent data polling cycles or sensor loops, the following method may be used.

1) The subsequent cycles of information which are completed by the apparatus 10 may use a slightly different method. In the initial sensor loop the apparatus established the initial placement of the subject's feet. Subsequent loops which are completed at a rate of 30 loops per second, will assign the previous placement or occupied grids an additional weighted value. This corresponds to the basic human mobility pattern by which movement can only be completed within a designated framework and speed.

2) The apparatus 10 completes a new polling cycle (sensor loop) and the first CPU will proceed to discard all but the ten highest probably occupied sub-areas.

3) In each one of these sub-areas the neighbor sub-areas which are directly surrounding the sub-areas are used to generate a weighted average for the given occupancy probability of the assigned sub-area. This new value is established for all ten of the selected sub-area mentioned in the previous step.

4) The first CPU then compares the sub-area locations of these ten new variables with the sub-area locations established in the previous sensor loop or data polling cycle. If any of these ten sub-area locations is the same as one of the previously marked four occupied grids from the previous analysis, then that same sub-area location will have an additional 10% likelihood of occupancy added onto its value.

a. Example: If sub-area number 14 was on a previous cycle identified as one of the four occupied sub-areas, then on the new cycle sub-area number 14 continues to be identified as one of the top ten percentile sub-areas. Then the first first CPU would continue to calculate the perimeter weighted average value and would then add an additional 10% to that result. This will give a much higher probable value to the previously identified sub-areas, as human moment is continuous when measured in increments of 1/30th of a second.

### Data Polling Initiation Triggers

1) Sequence Initiation: The apparatus 10 evaluates the comparative total percentile values of the top ten most likely occupied sub-areas in each subsequent polling cycle. If the apparatus determines that average of all of the top ten sub-areas is less than a 40% value, then apparatus will proceed to disregard that data and will poll again using the initial data polling method. A value of less than 40% shows a high likelihood of a jump or a recently abandoned floor sub-area. In the case of the subject jumping, there is uncertainty as to where they will land. Therefore, the apparatus 10 does not give any value to the previous cycle's polling data and will reestablish the subjects' position onto the area matrix 110 using the initial polling methodology.

### Three Dimensional ("3D") Cubed Volume Data Analysis

In a similar manner to the floor pad area, which may be designated by mapping onto the floor pad an area matrix 110 of 140 separate and uniform boxes, the 3-deminsnaionsal volume may be divided into a volume matrix 100 of sub-volumes comprising cubes 105. Referring to Figs 8 and 9, in one embodiment, the dimensions of the cubes are 105 are 20 CM X 20 CM X 24 CM. The volume between the floor pad 70 and the upper frame 15 which houses the upper frame transmitters 20 is divided intoen into eight floors of 32 cubes per level. This yields a total of 256 separate cubes that will comprise the total volume of the 3-D volume matrix 100.

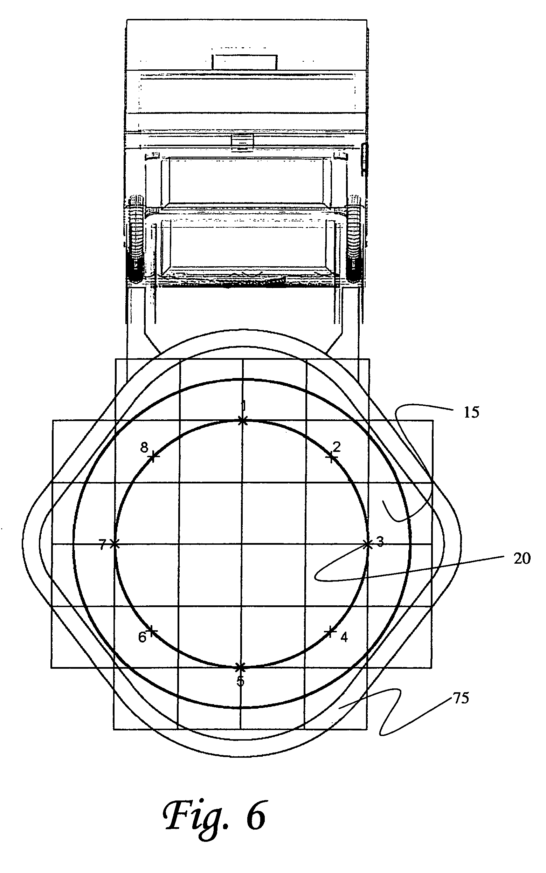

For gathering data about the position of a subjection within the volume matrix 100, in on embodiment, the apparatus has a total of eight equidistantly placed transmitters 20 on the upper frame 15. When each one of these transmitters 20 emits and infrared beam 130, a total of twenty-four receivers along the perimeter of the floor pad are sensing and reporting either a successful or unsuccessufl completion of the transmission. Fig. 5 illustrates a complete a cycle of firing of the transmitters 20 in a sequential manner. Fig. 6 and the sub-figures numbered 1-8 in Fig. 5 illustrate the upper frame 15 and the location of the transmitters projected on to the lower frame 75 which houses the receivers 80. The line of sight between a transmitter 20 and each of the receivers 80 constitutes a beam 130. In this embodiment, the first CPU will have a total of 192 (8 X 24) pieces of data to interpolate and accurately measure the subject's 3D position.

### Permanent 3D Data Polling Cycle

1) All of the possible cubes 105 on the volume matrix 100 are assigned the total number of line of sight, direct infrared transmissions which would successfully be transmitted if the volume matrix were completely unoccupied.

2) Each of the eight upper frame transmitters 20 is fired individually and the twenty-four receivers 80 in the lower frame 75 report the status of the transmission to the first CPU. (Successfully completed = 1, Incomplete = 0)

3) After the receivers 80 report their findings based on the complete cycle of eight transmission and twenty-four receptions (192 total), the first CPU proceeds to identify the individual percentage of successfully received beams 130 that are assigned to a particular cube and compute a ratio versus the total possible number of transmissions that would be completed when the volume matrix 100 is completely unoccupied. The first CPU then computes a occupancy probability based on a ratio of the number of beams 130 detected and assigned to the cube versus the total possible number of transmissions that could have been completed if the volume matrix 100 is completely unoccupied. The following formula may be used:

Probability of occupancy of a cube = 1 - (# of beams assigned to the cube successfully transmitted/total # beams that travel through the cube when the volume matrix is empty))/100)

For example, if a beam was received in a cube where four line of sight transmissions would be completed in an unobstructed scenario, the percentile of occupied probability would be calculated as: (1- (1/4))/100) = 75%

4) If the cube 105 in the volume matrix 100 has an occupancy probability of greater than those established for each individual level (As indicated below), than that cube is marked as occupied for that polling cycle. The first CPU is polling the complete 3D Matrix 30 times per second. The complete poll will generate a total of 256 values relative to the 8 levels and 32 cubes per level. The following listing shows the minimum occupancy value necessary for the demarcation of a cube as occupied:

Cubes on Level 1 (Bottom floor) need a minimum of 65%

Cubes on Level 2 need a minimum of 60%

Cubes on Level 3 need a minimum of 55%

Cubes on Level 4 need a minimum of 42%

Cubes on Level 5 need a minimum of 41 %

Cubes on Level 6 need a minimum of 40%

Cubes on Level 7 need a minimum of 55%

Cubes on Level 8 (Top floor) need a minimum of 60%

5) The first CPU than takes all the cubes which have been deemed occupied and divides all eight levels into thirty-two columns or vertical bars. Each column is comprised of eight cubes which are exactly one on top of the other. The value of each cube is then assigned based on the following listing which gives different values depending on the level:

a. Cubes on Level 1 (Bottom floor) are weighted with a value of 3

b. Cubes on Level 2 are weighted with a value of 2

c. Cubes on Level 3 are weighted with a value of 5

d. Cubes on Level 4 are weighted with a value of 5

e. Cubes on Level 5 are weighted with a value of 5

f. Cubes on Level 6 are weighted with a value of 4

g. Cubes on Level 7 are weighted with a value of 2

h. Cubes on Level 8 (Top floor) are weighted with a value of 2

6) Each column is then compared and the highest value column of cubes is then compared with its neighboring columns to establish, in the case of a human, the position of the subject's trunk, spinal column or frame.

7) Once the subject's trunk is identified, the first CPU uses the previous calculation of height and girth will analyze the corresponding perimeter of the outskirts of the column (usually in levels 4, 5 or 6) to determine if there is any hand or torso movement.

For example, on an average height and girth subject, if the vertical column of cubes that is standing on top of position 14 is determined by the first CPU to be the location of the torso, then the apparatus would proceed to evaluate the neighboring perimeter of cubes in levels 4, 5 and 6. If any of those cubes are have a higher than 40% occupancy probability, then they are marked as highly probable hand movements. The apparatus proceeds to complete this calculation for the complete surrounding 2 rows of neighboring cubes in the designated levels and will then collate that information to determine the general position of the arms, hands and torso.

8) The first CPU compares the values of all the selected perimeter cubes and then decides by weighted logic which ones are the most likely to be reflections of the real positions of the hands and arms. It will therefore at times interpret information differently depending on the given position of the subject's torso.

9) Each column which is identified as the torso's current potion, has a different set of comparative data which it uses to determine the movement of the extremities. This table is changed based on the values determined by the subject's movement, intensity of action (speed), body height, body girth, foot/shoe size and hand/arm length.

### Special 3D Body Movement Detection

There are several situations in which the data is analyzed specifically to detect a particular pattern or event. The number of possible cases is numerous. T here are many body movements that require special analysis of the data for more specific case handling. Some examples include the following:

1) Jumping: The apparatus uses a combination of floor pad gird data along with three dimensional grid data to determine if the subject within the Matrix has or is in the process of completing a jump, hop or floor displacement other than normal walking, jogging and/or running.

The apparatus will compare the value of the top ten weighted sub-areas 115 and if the value is below 45% will proceed to establish the value of the sub-volumes 105 which are deemed occupied. If occupancy probabilities determined for the sub-volumes validates the presence of a subject, the apparatus will proceed to transmit a jump signal.

2) Height and Girth: The apparatus also determines the approximate height and girth of a subject in order to automatically calibrate the sensing parameters. The apparatus may ask the subject to stand in the center of the floor pad 70 with their hands at their sides for two seconds, and apparatus can then determine the height of the subject by evaluating the sub-volumes that the subject's frame occupies. The apparatus will then proceed to give a weighted value to each vertical grid bar to determine the central trunk or spinal column of the subject and will use the value of the vertical gird bar columns on neighboring this center point to determine the girth of the subject

3) Squat: After the apparatus determines the vertical cube column which it currently has identified as the subject's trunk or spinal column, it will then proceed to add all of the values given to the occupied sub-volumes within that column based on the following:

a. Cubes on Level 1 (Bottom floor) are weighted with a value of 1

b. Cubes on Level 2 are weighted with a value of 4

c. Cubes on Level 3 are weighted with a value of 4

d. Cubes on Level 4 are weighted with a value of 5

e. Cubes on Level 5 are weighted with a value of 4

f. Cubes on Level 6 are weighted with a value of 4

g. Cubes on Level 7 are weighted with a value of 2

h. Cubes on Level 8 (Top floor) are weighted with a value of 2

If the result is equal to or less than14 then the subject is deemed to be below level 4 (1+4+4+5 = 14), a higher figure would represent occupancy of a higher floor. The parameters for this formula are adjusted based on the subjects' height.

### Communication & Interpretation of the PS/2 Data

The apparatus' circuit board may communicate with a computer resident inside the main kiosk through either PS/2, Serial or a USB connection. The data that is transmitted and analyzed in different variants depending on the particular workout module being utilized.

The data is also processed after being obtained and analyzed initially by the circuit board by the first CPU, which comprises an mMatrix delineation and secondary analysis processing unit. All of this analysis is fine tuned for each different set of movements which might be required depending on the dance, aerobic, game movements or other related considerations stemming from the nature of the graphical interface.

It is important to note that the mechanism used by the apparatus is not only identifying gross cube area occupied as well as a specific likelihood of future and previous movement and exact placement within the floor pad 70. As an example the following area matrix 110 analysis modes may be used:

### Puzzle Matrix Analysis Mode

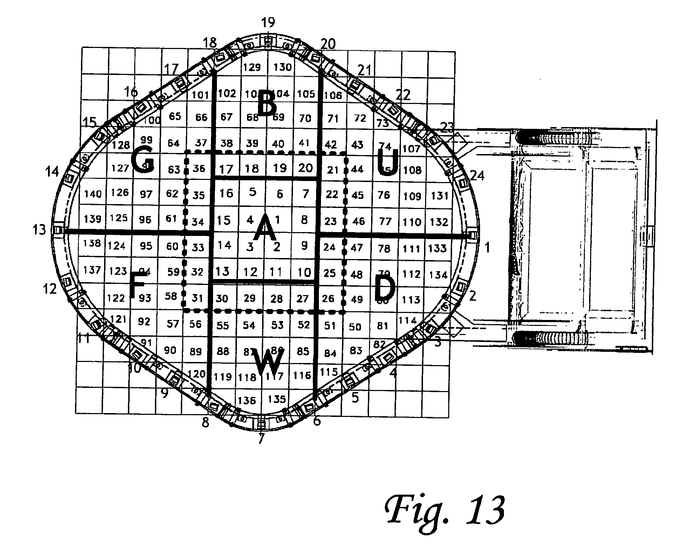

In the puzzle matrix analysis mode, illustrated in Fig. 13, the subject's feet are designated into 7 primary zones with a central square zone whose area is expanded or contracted based on the location and speed of the subject. Each mode has been designed for a specific type of interactive application as a means of enhancing workout responsiveness.

### Joystick Matrix Analysis Mode

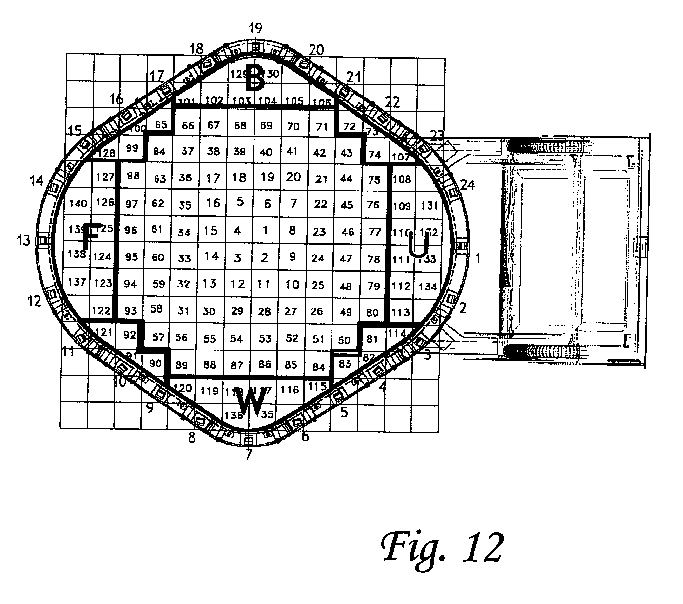

In Joystick Matrix analysis mode, illustrated in Fig. 12, the subject's foot movement is intentional. The transmission of data to the GUI processor is based on the subject's previous placement and their moving intention. It is very similar to how a joystick works in the sense that it does not matter where the subject is at, at any given point if the joystick (Or intention) is switched then the transmission of data corresponds to that new desired movement direction.

### Zone Matrix Analysis Mode

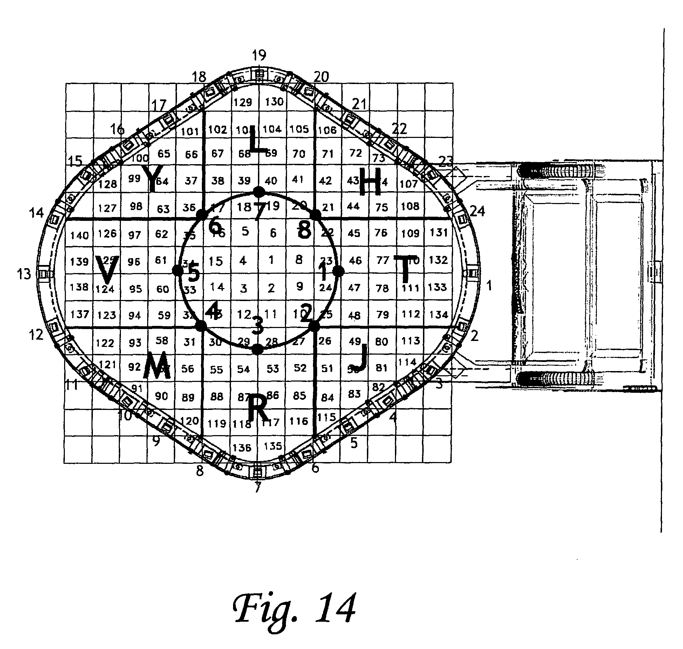

In the Zone Matrix analysis mode, illustrated in Fig. 14, the subject's position is based on a combination of steps which will determine a particular direction. The inner circle has eight potential directions which are then correlated with the external quadrant positions to determine the direction.

Many other "Modes" of data analysis may be utilized based on the particular skill level and desired movement complexity which may be designed into workout challenges. The raw data and the timing of the information acquired grants the apparatus enormous flexibility and the ability to produce a myriad of different analysis combinations for all types of users.

### Third Party Game Console Matrix Input Device

In a variant, the apparatus can also be used as an external input device similar to a joystick for use with third party device (for example, game consoles such as Microsoft X-Box, Sony Play station, and Nintendo Wii). The apparatus control board 95 is operable to connect directly into the third party device through its standard joystick or game controller input. Movements by a user positioned inside matrix 100, 110 are interpretive by the apparatus 10 using one or more of the methods described above and are then relayed back to the gaming console using the standard joystick interface protocol for that particular platform. Different movements generated from within the matrix 100, 110 are configured to correspond with the standard joystick keys of the device being controlled. The apparatus 10 may be configured to interpret different movements for different input devices from platform to platform.

### Networking Components

The apparatus may include a Personal Trainer module which has a networked topology primarily designed to help the end user to gain access to his personal performance and preference statistics from any other apparatus 10 or from any computer that has internet access.

Through the usage of a web enable application when the subject uses any apparatus 10 it immediately updates a master profile at a central database located on a server. The database can then be used by a gym, the client or by a third party internally to help the individual become more motivated to reach their goals by receiving valuable and useful, timely reports and access to their performance data.

This segmented database architecture gives the module a unique capability of transmitting real time movement, performance statistics and data across a network. This real time data can be used to challenge multiple subjects in real time as in a multi-player game environment or as a health and wellness tool that maintains an accurate real time profile of each end user.

While various embodiments of the present invention have been described above, it should be understood that they have been presented by way of example only, and not of limitation. Likewise, the various diagrams may depict an example architectural or other configuration for the invention, which is done to aid in understanding the features and functionality that can be included in the invention. The invention is not restricted to the illustrated example architectures or configurations, but the desired features can be implemented using a variety of alternative architectures and configurations. Indeed, it will be apparent to one of skill in the art how alternative functional, logical or physical partitioning and configurations can be implemented to implement the desired features of the present invention. Also, a multitude of different constituent module names other than those depicted herein can be applied to the various partitions. Additionally, with regard to flow diagrams, operational descriptions and method claims, the order in which the steps are presented herein shall not mandate that various embodiments be implemented to perform the recited functionality in the same order unless the context dictates otherwise.

Although the invention is described above in terms of various exemplary embodiments and implementations, it should be understood that the various features, aspects and functionality described in one or more of the individual embodiments are not limited in their applicability to the particular embodiment with which they are described, but instead can be applied, alone or in various combinations, to one or more of the other embodiments of the invention, whether or not such embodiments are described and whether or not such features are presented as being a part of a described embodiment. Thus the breadth and scope of the present invention should not be limited by any of the above-described exemplary embodiments.

Terms and phrases used in this document, and variations thereof, unless otherwise expressly stated, should be construed as open ended as opposed to limiting. As examples of the foregoing: the term "including" should be read as meaning "including, without limitation" or the like; the term "example" is used to provide exemplary instances of the item in discussion, not an exhaustive or limiting list thereof; the terms "a" or "an" should be read as meaning "at least one," "one or more" or the like; and adjectives such as "conventional," "traditional," "normal," "standard," "known" and terms of similar meaning should not be construed as limiting the item described to a given time period or to an item available as of a given time, but instead should be read to encompass conventional, traditional, normal, or standard technologies that may be available or known now or at any time in the future. Likewise, where this document refers to technologies that would be apparent or known to one of ordinary skill in the art, such technologies encompass those apparent or known to the skilled artisan now or at any time in the future.

A group of items linked with the conjunction "and" should not be read as requiring that each and every one of those items be present in the grouping, but rather should be read as "and/or" unless expressly stated otherwise. Similarly, a group of items linked with the conjunction "or" should not be read as requiring mutual exclusivity among that group, but rather should also be read as "and/or" unless expressly stated otherwise. Furthermore, although items, elements or components of the invention may be described or claimed in the singular, the plural is contemplated to be within the scope thereof unless limitation to the singular is explicitly stated.

The presence of broadening words and phrases such as "one or more," "at least," "but not limited to" or other like phrases in some instances shall not be read to mean that the narrower case is intended or required in instances where such broadening phrases may be absent. The use of the term "module" does not imply that the components or functionality described or claimed as part of the module are all configured in a common package. Indeed, any or all of the various components of a module, whether control logic or other components, can be combined in a single package or separately maintained and can further be distributed across multiple locations.

Additionally, the various embodiments set forth herein are described in terms of exemplary block diagrams, flow charts and other illustrations. As will become apparent to one of ordinary skill in the art after reading this document, the illustrated embodiments and their various alternatives can be implemented without confinement to the illustrated examples. For example, block diagrams and their accompanying description should not be construed as mandating a particular architecture or configuration.

## Claims

1. An apparatus for detecting position and movement of a subject within a volume of space, comprising:
an upper frame having a first plurality of infrared transmitters configured to emit infrared light through the volume;
a lower frame positioned below the upper frame, having a plurality of receivers configured to detect the infrared light emitted through the volume;
wherein the apparatus is configured to fire the transmitters and activate the receivers; and
wherein the apparatus is configured to report a status of successful infrared light transmission or a status of unsuccessful infrared light transmission for a particular transmitter-receiver pair after one of the first plurality of transmitters is fired.

2. The apparatus of claim 1, further comprising:
an area disposed within the lower frame; and
a second plurality of transmitters configured to emit infrared light across the area to the receivers;
wherein the receiver is configured to report a status of successful infrared light transmission or a status of unsuccessful infrared light transmission for a particular transmitter-receiver pair after one of the second plurality of transmitters is fired.

3. The apparatus of claim 2, wherein the apparatus is configured to have a virtual two-dimensional set of individually identifiable sub-areas defined over the area.

4. The apparatus of claim 3, wherein each transmitter-receiver pair has a unique designation and the sub-areas each have assigned one or more transmitter-receiver pairs, wherein the line of sight for light emitted from the receiver to the transmitter in each transmitter-receiver pair assigned to a particular sub-area passes through the sub-area.

5. The apparatus of claim 1, wherein the apparatus is configured to poll the transmitter-receiver pairs in a predefined pattern.

6. The apparatus of claim 1, wherein the apparatus is configured to have a virtual three-dimensional set of individually identifiable sub-volumes defined over the volume.

7. The apparatus of claim 6, wherein each transmitter-receiver pair has a unique designation and the sub-volumes each have assigned one or more transmitter-receiver pairs, wherein the line of sight for light emitted from the receiver to the transmitter in each transmitter-receiver pair assigned to a particular sub-volume, passes through the sub-volume;
wherein the apparatus is configured to associate the status of successful infrared light transmission or a status of unsuccessful infrared light transmission for the particular transmitter-receiver pair after the status is reported; and
wherein the apparatus is configured to tally the total number of transmitter-receiver pairs having a successful infrared light transmission through a sub-volume and compare it to the total number of assigned transmitter-receiver pairs.

8. The apparatus of claim 7, wherein comparing the total number of transmitter-receiver pairs having a successful infrared light transmission through a sub-volume to the total number of assigned transmitter-receiver pairs comprises computing a ratio of the successful transmissions to the total number of assigned pairs to the sub-volume; wherein the ratio is used to compute an occupancy percentile.

9. The apparatus of claim 1, further comprising:
a case for supporting the upper frame;
a first processor configured to interpret the data reported by the receivers; and
a display connected to the case, for displaying visual information based on the data interpreted by the first processor.

10. The apparatus of claim 9, further comprising:
a graphical user interface; and
a second processor for controlling the graphical user interface;
wherein the first processor is configured to convert the data into a format readable by the second processor;
wherein the apparatus is configured to display one or more modules for displaying instructions to the subject, to move in a predetermined manner.

11. The apparatus of claim 10, wherein the apparatus is configured to measure the movements of the subject and compare them to the instructions and display a measurement of the accuracy of the subject's movements based on the measured movements.

12. An electronic game apparatus, comprising:
a game module; and
an electronic controller configured to interpret the movements of a player of the electronic game to control the game module, without the player touching any mechanical objects.

13. The electronic game apparatus of claim 12, wherein the electronic controller comprises a set of beams of electromagnetic radiation having a predetermined spatial orientation in relation to the apparatus;
wherein the apparatus is configured to interpret the movements of a player by where the player's body intercepts the beams.

14. A method of controlling an electronic apparatus, comprising detecting the position and movements of a subject without the subject touching any mechanical objects.

15. The method of claim 14, further comprising:
positioning a subject within a volume;
emitting a series of infrared beams through the volume;
detecting a plurality of the emitted beams across the volume;
determining which beams successfully traversed the volume and which beams were blocked by the subject;
tallying the total number of beams successfully transmitted through a particular sub-volume of the volume; and
comparing the total number of beams successfully transmitted through the sub-volume to the total number of beams that would pass through the sub-volume if the sub-volume were unoccupied.
